# EUROPEAN PATENT SPECIFICATION

(11) **EP 0 649 275 B1**
(45) Date of publication and mention of the grant of the patent: **18.11.1998**
(21) Application number: 93914648.6
(22) Date of filing: 06.07.1993
(51) Int. Cl.: A01N 43/647, A01N 43/653, A01N 43/28, A01N 55/08, B27K 3/50

(54) **A FUNGICIDE**
FUNGIZID
FONGICIDE

(30) Priority: 07.07.1992 DK 89492
(43) Date of publication of application: 26.04.1995
(73) Proprietor: S. DYRUP & CO. A/S, DK-2860 Soborg (DK)
(72) Inventor: IMSGARD, Finn, DK-6000 Kolding (DK)
(74) Representative: Christiansen, Ejvind
(86) International application number: DK9300226
(87) International publication number: WO9400988

(56) References cited:
- EP-A- 0 038 109
- EP-A- 0 300 413
- EP-A- 0 393 746
- WO-A-93/02557
- DE-A- 3 617 250
- DE-A- 4 130 483

## Description

The present invention concerns a fungicide which is characterized in that as active component it contains a mixture of a triazole compound and a boric acid ester selected from trihexyleneglycol biborate and compounds having the general formula

B-(O-R)₃ I

or the general formula 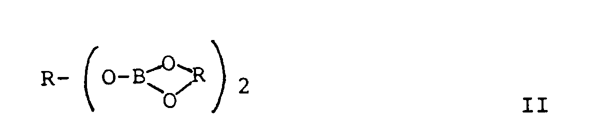 in which formulae R is an aliphatic group having 1-18 C-atoms or an aromatic group, the triazole compound and the boric acid ester forming a mixing ratio between 1:1 and 1:20, preferably between 1:2 and 1:10. The fungicide according to the invention exhibits a surprising synergistic effect.

Preferably the fungicide according to the invention contains as active component a mixture consisting of propiconazole (1-[[2-(2,4-dichlorophenyl)-4-propyl-1,3-dioxolan-2-yl]methyl]-1H-1,2,4-triazole) and a boric acid ester, preferably Borester-7 (trihexyleneglycol biborate). Such a mixture has a wood-preserving effect which is far better than the expected, purely additive effect.

Propiconazole, which has the structural formula 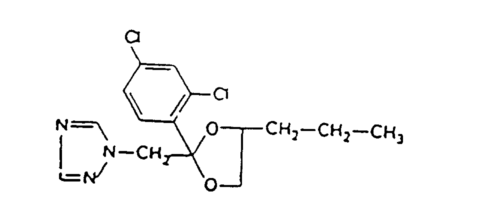 is a clear, pale or vivid yellow, very viscous liquid, which during recent years has gained a footing as wood preservative. The compound is a systemic fungicide with a broad activity spectrum. It is i.a. used within agriculture for controlling diseases in grain varieties caused by Erysiphe graminis, Leptosphaeria norodum, Pseudocerosporella herpotrichoides, Pyrenophora teres and Rhynchosporium secalis, and it is also used in certain localities for combating Uncinula necator on grapes.

Within the field of wood preservation the compound has partly been used per se (cf. Alex Valcke: "Suitability of Propiconazole (R 49362) as a new-generation wood-preserving fungicide", The International Research Group on Wood Preservation", presented March 1989 at the annual meeting in Lappeenrauta, Finland), and partly been used in mixtures with other fungicides. The compound in pure form for protection of wood and coatings against microorganisms has been described in DK published application No. 163 805. Mixtures of propiconazole with other fungicidally and insecticidally active compounds are i.a. known from EP published specifications No. 413 909 and No. 458 060 which concern fungicidal mixtures of propiconazole with pyrethroides and carbamates, respectively.

As mentioned propiconazole is the preferred triazole-constituent in the fungicide according to the invention, but it is quite feasible to replace propiconazole wholly or partly by other triazoles which are effective against wood destroying fungi. An example of such a triazole compound is tebucanozole (α-[2-(4-chlorophenyl)ethyl]-α-(1,1-dimethylethyl)-1H-1,2,4-triazole-1-yl-ethanol).

Boron compounds have for many years been used as active component in agents for all sorts or wood preservation. Boric acid was put to use as early as in 1937 and is still used, but also borates and various boric acid derivatives have found use as fungicides.

Boron containing formulations have good diffusion properties and are consequently often the only usable possibility when it comes to treatment of hard to impregnate types of wood.

Glycol esters of boron, which are soluble in organic solvents, e.g. trihexyleneglycol biborate, and boron dissolved in co-solvents, such as monoethylene glycol, have made it possible to utilize borates in a number of different formulations, the effect of which is due to the hydrolysis of the boron compound to boric acid in the wood.

Agents or concentrates for wood preservation which contain organic boron acid esters in combination with various biocides are described in DE published specification No. 3 617 250.

It has not previously been tried to use propiconazole and boric acid esters together.

It has, however, now surprisingly been found that by mixing the two fungicides a mixture is obtained which has an effect which is clearly better than the expected, purely additive effect. The synergism appears from the following table:

**Table 1**

| External tests with Coniophora puteana performed in accordance with European standard EN113. | | | |
|---|---|---|---|
| | Effect level kg/m³ in the wood | | |
| | A + B (1:10) | A | B |
| A. Propiconazole | < 0.054 | 0.19-0.37 | |
| B. Trihexyleneglycol biborate | < 0.54 | | >2.09 |

The table is to be interpreted as follows:

Propiconazole, which in pure form has a threshold value (biological reference value as defined in European standard EN599-1) of 0.19-0.37 kg/m³, exhibits a threshold value which is below 0.054 kg/m³ in mixture with 10 parts of boric acid ester. The concentration of the boric acid ester in the wood in the experiment at issue was 0.54 kg/m³, and this level is far below the limit at which the boric acid ester alone has an effect (above 2.09 kg/m³). The mixture is thus significantly more effective than the individual components.

Furthermore, internal tests with Coniophora puteana have been performed in accordance with the so-called Sobeto-test. In this test small wooden blocks (length 3.0 cm, width 1.0 cm, and thickness 0.5 cm) are treated with impregnating agent and tested against fungi (Coniophora puteana) in a soil medium. The mass loss of the wooden blocks is an expression of the decomposition of the wood by the fungus, and the weight of the wooden blocks is consequently recorded before and after the fungal exposure. The results appear from the table below:

**Table 2**

| | Effect level kg/m3 in the wood | | |
|---|---|---|---|
| | A + B (1:10) | A | B |
| A. Propiconazole | < 0.15 | < 0.3 | |
| B. Trihexyleneglycol biborate | < 1.5 | | > 4.5 |

This table is to be interpreted in the same way as table 1 above.

In the fungicidal formulations according to the invention it is preferred to use solvent mixtures of hydrocarbons and for example glycol ethers. Use can be made of a mixing ratio of as much as 1:1, the mixing ratio preferably being between 1:20 and 1:1.

The following example illustrates the invention.

### EXAMPLE

The formulation used in the tests described above was prepared according to the following recipe:

| | |
|---|---|
| Propiconazole | 0.6% |
| Trihexyleneglycol biborate | 6.0% |
| Dipropyleneglycol monomethylether | 8.4% |
| Dearomatized hydrocarbon solvent | 85.0% |

The ratio between propiconazole and trihexyleneglycol biborate is 1:10, but according to the invention it may vary from 1:2 to 1:20. Also the ratio between the solvents may be varied.

## Claims

1. A fungicide, **characterized** in that as active component it contains a mixture of a fungicidal triazole compound and a boric acid ester selected from trihexyleneglycol biborate and compounds having the general formula
B-(O-R)₃ I
or the general formula 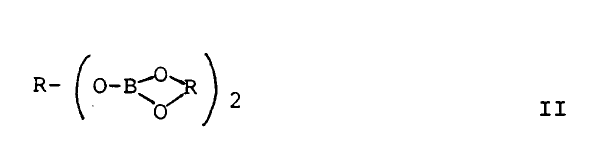 in which formulae R is an aliphatic group having 1-18 C-atoms or an aromatic group, the triazole compound and the boric acid ester forming a mixing ratio between 1:1 and 1:20.

2. A fungicide according to claim 1, **characterized** in that the mixing ratio between the triazole compound and the boric acid ester is between 1:2 and 1:10.

3. A fungicide according to claim 1 or 2, **characterized** in that it further contains solvents in the form of glycol ethers and aliphatic hydrocarbons in a mutual mixing ratio between 1:20 and 1:1.

4. A fungicide according to any of the claims 1-3, **characterized** in that as active component it contains a mixture consisting of propiconazole (1-[[2-(2,4-dichlorophenyl)-4-propyl-1,3-dioxolan-2-yl]methyl]- 1H-1,2,4-triazole) and a boric acid ester.

5. A fungicide according to any of the claims 1-4, **characterized** in that the boric acid ester is trihexyleneglycol biborate.

6. A fungicide according to claim 5, **characterized** in that propiconazole and trihexyleneglycol biborate are present in the mixture at the ratio 1:10.

7. A fungicide according to any of the claims 1-3, **characterized** in that as active component it contains a mixture consisting of tebuconazole (α-[2-(4-chlorophenyl)ethyl]-α-(1,1-dimethylethyl)-1H-1,2,4-triazole-1-yl-ethanol) and a boric acid ester.

## Patentansprüche

1. Fungizid, dadurch gekennzeichnet, daß es als aktiven Bestandteil ein Gemisch einer fungiziden Triazolverbindung und eines Borsäureesters enthält, der ausgewählt ist aus Trihexylenglycolbiborat und Verbindungen mit der allgemeinen Formel
B-(O-R)₃ I
oder der allgemeinen Formel 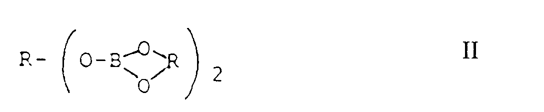 wobei R in der Formel eine aliphatische Gruppe mit 1-18 C-Atomen oder eine aromatische Gruppe ist, wobei die Triazolverbindung und der Borsäureester ein Mischverhältnis zwischen 1:1 und 1:20 bilden.

2. Fungizid nach Anspruch 1, dadurch gekennzeichnet, daß das Mischverhältnis zwischen der Triazolverbindung und dem Borsäureester zwischen 1:2 und 1:10 ist.

3. Fungizid nach Anspruch 1 oder 2, dadurch gekennzeichnet, daß es weiterhin Lösungsmittel in Form von Glycolethern und aliphatischen Kohlenwasserstoffen in einem gegenseitigen Mischverhältnis zwischen 1:20 und 1:1 enthält.

4. Fungizid nach einem der Ansprüche 1-3, dadurch gekennzeichnet, daß es als aktiven Bestandteil ein Gemisch enthält, das aus Propiconazol (1-[[2-(2,4-Dichlorphenyl)-4-propyl-1,3-dioxolan-2-yl]methyl]-1H-1,2,4-triazol) und einem Borsäureester besteht.

5. Fungizid nach einem der Ansprüche 1-4, dadurch gekennzeichnet, daß der Borsäureester Trihexylenglycolbiborat ist.

6. Fungizid nach Anspruch 5, dadurch gekennzeichnet, daß Propiconazol und Trihexylenglycolbiborat in dem Gemisch in dem Verhältnis von 1:10 vorliegen.

7. Fungizid nach einem der Ansprüche 1-3, dadurch gekennzeichnet, daß es als aktive Komponente ein Gemisch enthält, das aus Tebuconazol (α-[2-(4-Chlorphenyl)ethyl]-α-(1,1-dimethylethyl)-1H-1,2,4-triazol-1-yl-ethanol) und einem Borsäureester besteht.

## Revendications

1. Fongicide, caractérisé en ce qu'il contient, comme composant actif, un mélange d'un composé triazole fongicide et d'un ester d'acide borique choisi parmi le diborate de trihexylèneglycol et les composés de formule générale
B-(O-R)₃ I
ou de formule générale 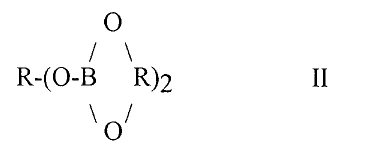 dans lesquelles R est un groupe aliphatique comportant 1-18 atomes de C ou un groupe aromatique, le composé triazole et l'ester d'acide borique étant dans un rapport de mélange compris entre 1:1 et 1:20.

2. Fongicide selon la revendication 1, caractérisé en ce que le rapport de mélange entre le composé triazole et l'ester d'acide borique est compris entre 1:2 et 1:10.

3. Fongicide selon la revendication 1 ou la revendication 2, caractérisé en ce qu'il contient en outre des solvants sous forme d'éthers de glycol et d'hydrocarbures aliphatiques dans un rapport de mélange mutuel compris entre 1:20 et 1:1.

4. Fongicide selon l'une quelconque des revendications 1-3, caractérisé en ce qu'il contient, comme composant actif, un mélange constitué de propiconazole (1-[[2-(2,4-dichlorophényl)-4-propyl-1,3-dioxolane-2-yl]méthyl]-1H-1,2,4-triazole) et d'un ester d'acide borique.

5. Fongicide selon l'une quelconque des revendications 1-4, caractérisé en ce que l'ester d'acide borique est du diborate de trihexylèneglycol.

6. Fongicide selon la revendication 5, caractérisé en ce que le propiconazole et le diborate de trihexylèneglycol sont présents dans le mélange dans un rapport de 1:10.

7. Fongicide selon l'une quelconque des revendications 1-3, caractérisé en ce qu'il contient, comme composant actif un mélange constitué de tébuconazole (α-[2-(4-chlorophényl)éthyl]-α-(1,1-diméthyléthyl)-1H-1,2,4-triazole-1-yl-éthanol) et d'un ester d'acide borique.
